# EUROPÄISCHE PATENTANMELDUNG

(11) **EP 4 389 254 A1**
(43) Veröffentlichungstag der Anmeldung: **26.06.2024**
(21) Anmeldenummer: 22214456.0
(22) Anmeldetag: 19.12.2022
(51) Int. Cl.: B01D 39/06, B01D 39/20, B01D 46/24, B01D 53/04

(54) **FILTERELEMENT MIT MATRIXFÖRMIGER STÜTZSTRUKTUR**

(71) Anmelder: Carl Freudenberg KG, 69469 Weinheim (DE)
(72) Erfinder: Beisel, Tobias, 69483 Wald-Michelbach (DE); Herberg, Felix, 64646 Heppenheim (DE); Hücker, Dr. Verena, 69469 Weinheim (DE); Sieh, Maik, 69207 Sandhausen (DE)

(57) **Zusammenfassung**

Die Erfindung betrifft ein Filterelement (10) zur Luftfiltration mit einer matrixförmigen Stützstruktur (1), welche eine Vielzahl von durch Kanalwände (12) voneinander getrennte Kanäle (11) aufweist und die mit einem feste Sorbentien enthaltenen Schüttgut (2) gefüllt ist. Das Schüttgut (2) kann ein Granulat aus Adsorbentien und/oder Absorbentien sein. Erfindungsgemäß ist die matrixförmige Stützstruktur (1) aus einem adsorbierenden Material gefertigt. Ein solches Filterelement weist in vorteilhafter Weise eine gute adsorbierende bzw. absorbierende Wirkung auf.

## Beschreibung

Die Erfindung betrifft ein Filterelement zur Luftfiltration mit einer matrixförmigen Stützstruktur, welche eine Vielzahl von durch Kanalwände voneinander getrennte Kanäle aufweist und die mit einem feste Sorbentien enthaltenen Schüttgut gefüllt ist.

### Stand der Technik

Im Stand der Technik sind Filterelemente bekannt, welche Partikel filtern und Gase adsorbieren. Filterelemente dieser Art können verwendet werden, um Fahrgasträume als auch Räume von Gebäuden von für Menschen gesundheitsschädlichen Stoffen, insbesondere von Gasen und Dämpfen, in hohem Maße zuverlässig freizuhalten

Vor diesem Hintergrund wird in der DE 10 2013 011 457 A1 vorgeschlagen, Aktivkohle in schütt- oder rieselfähiger Form zu verwenden. Es wird insbesondere vorgeschlagen, Aktivkohle in Form von Granulaten zu verwenden, welche auf Vliesstoffe aufgebracht werden können.

Vor diesem Hintergrund ist aus der DE 101 04 882 B4 auch ein Aktivkohleformkörper bekannt, welcher eine Wabenstruktur aufweist. Der Aktivkohleformkörper ist durch Extrusion einer Mischung aus Aktivkohle und weiterer Stoffe gefertigt und dient zur Verwendung als Adsorptionsfilter.

Ein weiteres Filterelement, welches einen Aktivkohleformkörper mit einer Wabenstruktur aufweist, ist aus der DE 101 50 062 B4 bekannt.

Die DE 10 2004 063 434 B4 offenbart einen weiteren Aktivkohleformkörper mit Kanälen.

Nachteilig bei den aus dem Stand der Technik bekannten Lösungen ist, dass im Fall von auf Vliesstoffe aufgebrachtem Schüttgut, das Schüttgut zumindest teilweise mit Klebstoff benetzt werden muss, um es an dem Vliesstoff zu fixieren. Dabei wird die aktive also wirksame Fläche des Schüttguts und damit das Reinigungspotential reduziert.

Problematisch bei der Verwendung von wabenförmigen Stützkörpern aus Kunststoff oder Aluminium, welche mit Schüttgut befüllt sind, ist, dass sich das Schüttgut in den einzelnen Waben bewegen und verrutschen kann, wenn das Filterelement bewegt wird oder Erschütterungen bzw. Vibrationen ausgesetzt ist. Mit dem Verrutschen des Schüttguts kann einhergehen, dass das Schüttgut ungleichmäßig in einer Wabe verteilt vorliegt und im Bereich einzelner Wände der Stützstruktur Freiräume entstehen können, in welchen kein Schüttgut vorliegt. Strömt zu reinigende Luft nun durch diesen Freiraum an der Wand entlang, so erfährt die Luft keine Reinigung.

### Aufgabenstellung

Aufgabe der vorliegenden Erfindung ist es ein Filterelement zu schaffen, welches eine verbesserte adsorbierende bzw. absorbierende Wirkung aufweist. Auch wenn das Filterelement Vibrationen ausgesetzt ist, soll eine gute Filterwirkung sichergestellt werden.

### Technische Lösung

Gelöst wird diese Aufgabe durch ein Filterelement wie es nachfolgend beschrieben und beansprucht ist.

Erfindungsgemäß wurde als vorteilhaft erkannt, die matrixförmige Stützstruktur aus einem adsorbierenden Material zu fertigen.

Das erfindungsgemäße Filterelement dient zur Luftfiltration und verfügt über eine matrixförmige Stützstruktur, welche eine Vielzahl von durch Kanalwände voneinander getrennte Kanäle aufweist. Die Kanäle können auch als Hohlräume oder Kammern bezeichnet werden. Die Stützstruktur ist, genauer, deren Kanäle sind mit einem feste Sorbentien enthaltenen Schüttgut gefüllt. In vorteilhafter Weise ist die matrixförmige Stützstruktur aus einem adsorbierenden Material gefertigt.

In einer besonders vorteilhaften Weiterbildung des Filterelements weist das adsorbierende Material der Stützstruktur Aktivkohle auf oder ist aus Aktivkohle. Die Fertigung von Stützstrukturen aus Aktivkohlematerial ist problemlos möglich. Denkbar ist beispielsweise die Ausbildung aus einer Aktivkohlekeramik.

In Weiterbildung des Filterelements kann die Stützstruktur als Aktivkohle-Wabenkörper ausgebildet sein. Ein Wabenkörper umfasst eine Vielzahl von matrixartig angeordneten Kanälen, welche ähnlich den Waben einer Bienenwabe, direkt aneinander angrenzend angeordnet sind, und eine gitterförmige Struktur bilden. Ein solches Filterelement kann auch als Wabenfilter bezeichnet werden.

Das Schüttgut des Filterelements kann ein Granulat aus Adsorbentien und/oder Absorbentien sein. Adsorbentien werden auch als Adsorbens bezeichnet und bewirken eine Anlagerung von Stoffen aus dem zu reinigenden Luftstrom. Absorbentien werden auch als Absorbens bezeichnet und bewirken eine Aufnahme von Stoffen aus dem zu reinigenden Luftstrom.

Auch kugelförmige, pulverförmige und körnige Medien werden hier als granulare Medien und damit als Granulat angesehen.

Es ist darauf zu achten, dass die Form des Granulats entsprechende Zwischenräume in den Kanälen ermöglicht, sodass die zu reinigende Luft durch die Kanäle strömen kann. Die Zwischenräume ermöglichen eine maximale Kontaktfläche zwischen Adsorbentien/Absorbentien-Oberfläche und der zu reinigenden Luft, was der Abscheideleistung zugutekommt.

Als Ab- bzw. Adsorbentien kann beispielsweise imprägnierte Aktivkohle, Ionentauscher und / oder Kaliumpermanganat in unterschiedlichen Formen eingesetzt werden. Entsprechende lonentauscherkügelchen können beispielsweise für eine Ammoniak (NH3)-Adsorption im Aktivkohle-Wabenkörper sorgen. Kaliumpermanganat-Pellets können beispielsweise für die Stickstoffmonoxid-Abscheidung eingesetzt werden.

In möglicher Ausgestaltung des Filterelements kann das Schüttgut in mehreren Schichten in der matrixförmigen Stützstruktur vorliegen. Das meint, dass unterschiedliche Adsorbentien und /oder Absorbentien in die Kanäle der Stützstruktur geschichtet sind. Die unterschiedlichen Schichten können so nacheinander von einem zu reinigenden Luftstrom durchströmt und der Luftstrom so gezielt gereinigt werden. So kann beispielsweise durch eine passende Wahl der Schichtung unterschiedlicher Schüttgüter eine vorgelagerte Oxidation von NO zu NO2/NOx mit einer anschließenden Adsorption erreicht werden.

Die maximale Korngröße des Schüttguts sollte kleiner als die minimale Weite eines Kanals der Stützstruktur sein, damit das Schüttgut gut in den Kanälen aufgenommen werden kann.

In Weiterbildung des Filterelements ist die Stützstruktur an ihrer Oberseite und ihrer Unterseite, also an den Öffnungen der Kanäle, jeweils mit einer Abdeckung versehen. Die beiden Abdeckungen können z.B. flächig bzw. plattenförmig ausgestaltet und an die Stützstruktur angeklebt sein. So wird sichergestellt, dass das Schüttgut auch bei Handhabung des Filterelements oder wenn das Filterelement Vibrationen ausgesetzt ist, sicher in den Kanälen der Stützstruktur verbleibt.

In möglicher Ausgestaltung kann die Abdeckung durch einen Vliesstoff, ein Papier, eine Membran oder ein feinmaschiges Gitter ausgeführt sein. Im Falle der Ausgestaltung als feinmaschiges Gitter sollte die maximale Maschenweite des Gitters dabei kleiner sein als die minimale Korngröße des Schüttguts.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Schnittansicht durch ein Filterelement, welches als Wabenfilter ausgeführt ist
- Fig. 2: den Vorgang der Herstellung des Wabenfilters
- Fig. 3a und b: zwei Varianten eines Stützkörpers

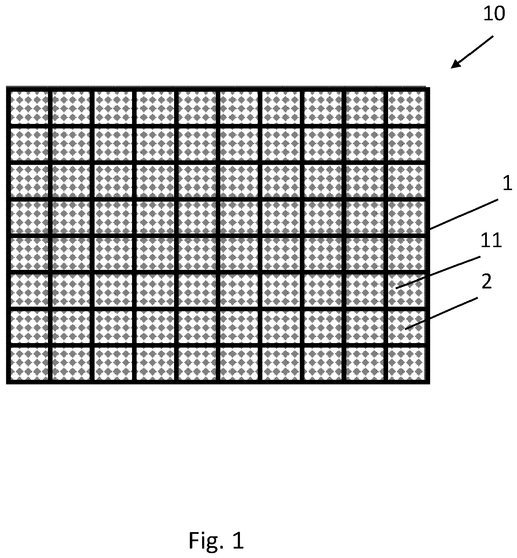

Fig. 1 zeigt einen Schnitt durch ein Filterelement 10, welches als Wabenfilter ausgeführt ist. Das Filterelement 10 weist einen matrixförmigen Stützkörper 1 auf, dessen Kanäle 11 mit einem granularen Schüttgut 2 befüllt sind. Das Schüttgut 2 ist ein Granulat aus Adsorbentien und/oder Absorbentien.

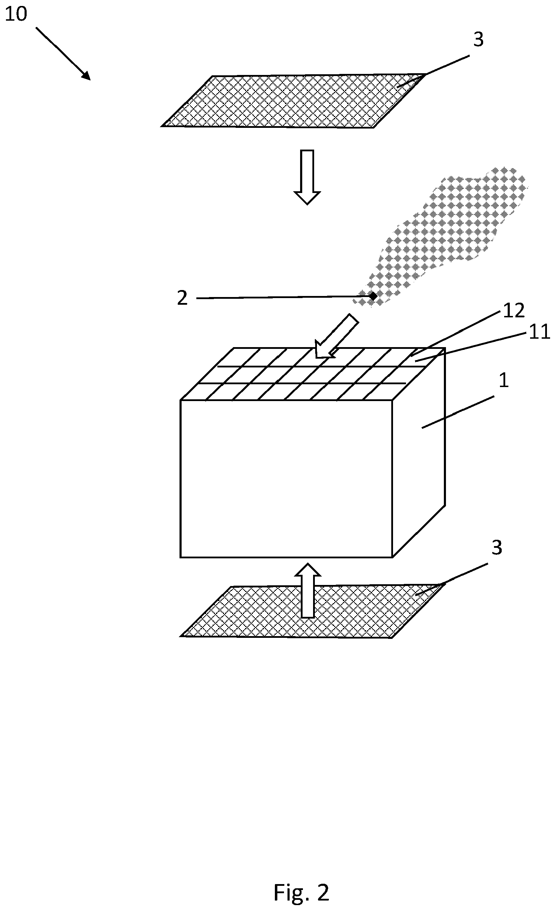

Fig. 2 zeigt den Vorgang der Herstellung eines Filterelement 10. Eine matrixförmige Stützstruktur 1 wird mit einem granularen Schüttgut 2 befüllt, wie dies durch einen Pfeil angedeutet ist. Die matrixförmige Stützstruktur 1 wird durch einen Wabenkörper ausgebildet, welcher eine Vielzahl von Kanälen 11 aufweist, die durch Kanalwände 12 voneinander getrennt sind. Nach erfolgter Befüllung wird auf die Oberseite und die Unterseite der Stützstruktur 1 jeweils eine Abdeckung 3 aufgebracht, z.B. aufgeklebt. Alternativ könnte auch zuerst eine Abdeckung 3 an der Stützstruktur 1 angebracht werden, dann die Befüllung mit Schüttgut 2 erfolgen und sodann die zweite Abdeckung 3 angebracht werden.

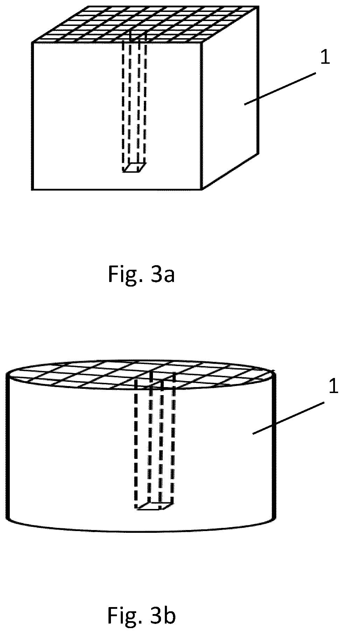

Fig. 3a und b zeigen zwei Varianten eines matrixförmigen Stützkörpers 1, welche beide eine Vielzahl von direkt aneinander angrenzenden Kanälen 11 aufweisen, die durch Kanalwände 12 voneinander getrennt sind. Die Stützkörper 1 unterscheiden sich in ihrer äußeren Form. So kann der rechteckige Stützkörper 1 für Filterelemente 10 verwendet werden, welche in einer Filteranordnung in Reihe oder matrixartig in Reihen und Spalten angeordnet werden. Der zylinderförmige Stützkörper 1 kann für Filterelemente 10 verwendet werden, welche in Rohren oder Schläuchen platziert werden sollen.

### Bezugszeichenliste

- 1: matrixförmige Stützstruktur
- 2: Schüttgut (Granulat)
- 3: Abdeckung

- 10: Filterelement

- 11: Kanal
- 12: Kanalwand

## Patentansprüche

1. Filterelement (10) zur Luftfiltration mit einer matrixförmigen Stützstruktur (1), welche eine Vielzahl von durch Kanalwände (12) voneinander getrennte Kanäle (11) aufweist und die mit einem feste Sorbentien enthaltenen Schüttgut (2) gefüllt ist, **dadurch gekennzeichnet, dass** die matrixförmige Stützstruktur (1) aus einem adsorbierenden Material gefertigt ist.

2. Filterelement nach Anspruch 1, **dadurch gekennzeichnet, dass** das adsorbierende Material Aktivkohle aufweist.

3. Filterelement nach Anspruch 2, **dadurch gekennzeichnet, dass** die Stützstruktur (1) als Aktivkohle-Wabenkörper ausgebildet ist.

4. Filterelement nach einem der vorangehenden Ansprüche, **dadurch gekennzeichnet, dass**
das Schüttgut (2) ein Granulat aus Adsorbentien und/oder Absorbentien ist.

5. Filterelement nach einem der vorangehenden Ansprüche, **dadurch gekennzeichnet, dass**
das Schüttgut (2) in mehreren Schichten vorliegt.

6. Filterelement nach einem der vorangehenden Ansprüche, **dadurch gekennzeichnet, dass**
die Korngröße des Schüttguts (2) kleiner als die Weite eines Kanals (11) der Stützstruktur (1) ist.

7. Filterelement nach einem der Ansprüche 4 bis 6, **dadurch gekennzeichnet, dass**
das Schüttgut (2) imprägnierte Aktivkohle, Ionentauscher und/oder Kaliumpermanganat aufweist.

8. Filterelement nach einem der vorangehenden Ansprüche, **dadurch gekennzeichnet, dass**
die Stützstruktur (1) an ihrer Oberseite und ihrer Unterseite jeweils mit einer Abdeckung (3) versehen ist.

9. Filterelement nach Anspruch 8, **dadurch gekennzeichnet, dass**
die Abdeckung (3) durch einen Vliesstoff, ein Papier, eine Membran oder ein feinmaschiges Gitter ausgeführt ist.
